# EUROPÄISCHE PATENTSCHRIFT

(11) **EP 1 544 419 B1**
(45) Veröffentlichungstag und Bekanntmachung des Hinweises auf die Patenterteilung: **27.12.2006**
(21) Anmeldenummer: 04024481.6
(22) Anmeldetag: 14.10.2004
(51) Int. Cl.: F01L 1/34, F01L 1/344

(54) **Brennkraftmaschine mit einem hydraulischen Nockenwellenversteller mit einem als Blechteil ausgeführten Stator**
Internal combustion engine with a hydraulic cam phaser having a stator made of sheet metal
Moteur à combustion interne avec un déphaseur d'arbre à cames hydraulique comprenant un stator en tôle métallique

(30) Priorität: 16.12.2003 DE 10359068
(43) Veröffentlichungstag der Anmeldung: 22.06.2005
(73) Patentinhaber: Schaeffler KG, 91074 Herzogenaurach (DE)
(72) Erfinder: Wierl, Ulrich, 93336 Mendorf (DE); Ottersbach, Rainer, 91086 Aurachtal (DE); Kohrs, Mike, 02681 Wilthen (DE); Auchter, Jochen, 91085 Weisendorf (DE)

(56) Entgegenhaltungen:
- DE-A1- 10 161 701
- US-B1- 6 386 167

## Beschreibung

### Gebiet der Erfindung

Die Erfindung betrifft eine Brennkraftmaschine mit einer hydraulischen Vorrichtung zur Drehwinkelverstellung einer Nockenwelle gegenüber einer Kurbelwelle, umfassend: einen Rotor mit daran angeordneten Flügeln, der drehfest mit der Nockenwelle verbunden ist, einen stirnseitig mit einer Stirnwand versehenen Stator, der drehfest mit einem von der Kurbelwelle angetriebenen Antriebsrad verbunden ist, wobei beiderseits der Flügel Druckkammern vorgesehen sind, die jeweils durch Stegwände und innere sowie äußere, in Umfangsrichtung, konzentrisch zueinander verlaufende Wände des Stators begrenzt sind und über ein Hydrauliksystem mit Hydraulikflüssigkeit druckbeaufschlagbar oder entleerbar sind.

### Hintergrund der Erfindung

Aus der DE 101 34 320 A1 ist eine Brennkraftmaschine mit einer gattungsgemäßen hydraulischen Vorrichtung zur Drehwinkelverstellung einer Nockenwelle bekannt, die die Phasenlage einer Nockenwelle gegenüber einer Kurbelwelle verändern kann. Diese Vorrichtung besteht aus einem Rotor und einem Stator, von denen ersterer, als Flügelrad ausgebildet, die Nockenwelle umfasst, an ihr mit einer axialen Zentralschraube befestigt ist und sich synchron mit ihr dreht. Der Stator ist einerseits durch eine Stirnwand, welche Teil eines den Stator umgebenden Gehäuses sein kann, und andererseits durch ein Antriebsrad druckmitteldicht verschlossen. Er umfasst den Rotor und dreht sich synchron mit dem von der Kurbelwelle angetriebenen Antriebsrad. Im wesentlichen radial verlaufende Stegwände im Stator erlauben nur einen begrenzten Drehwinkel des Rotors und bilden mit diesem mehrere Druckkammern, die mit Hydraulikflüssigkeit druckbeaufschlagt oder entleert werden können.

Nachteilig bei dieser bekannten Vorrichtung ist jedoch, dass die Einzelteile der Vorrichtung vorwiegend aus Stahl oder Eisen bestehen, welche durch Sintern oder Zerspanen hergestellt sind. Daraus resultieren
1. eine hohe Masse der Vorrichtung zur Drehwinkelverstellung,
2. hohe Fertigungskosten durch den Zerspanungsaufwand bei der Fertigung der Sinterbauteile,
3. eine unerwünschte, externe Ölleckage durch die porösen Sinterbauteile.

Weil in der Sintermetallurgie dünne Wandstärken, insbesondere im Zusammenhang mit Wandstärkenschwankungen hinsichtlich Dichteverteilung sowie Festigkeit und Steifigkeit problematisch sind und sich weiterhin komplexe Formen mit unterschiedlichen Füllhöhen oftmals nur mit teuren Schiebern im Werkzeug realisieren lassen, sind bisherige Vorrichtungen zur Drehwinkelverstellung meist aus relativ schweren und massiven Bauteilen gefertigt. Bei spanend hergestellten Vorrichtungen liegt die Problematik ähnlich; komplizierte, der Belastung angepasste Formen sind mit hohem Zerspanungsaufwand verbunden.

Ein Vorschlag zur Massereduzierung der Vorrichtung zur Drehwinkelverstellung kann beispielsweise der DE 101 48 687 A1 oder der DE 101 34 320 entnommen werden, indem Teile der Vorrichtung aus Aluminium oder aus einer Aluminiumlegierung oder einem anderen Leichtmetall gefertigt werden. Dies hat zum Nachteil, dass durch unterschiedliche Wärmeausdehnungskoeffizienten die Leckspalte über die Erwärmung zunehmen können und sich damit eine hohe Leckage ergibt. Außerdem verformt sich bei gleichen Abmessungen Aluminium unter Last stärker als Stahl bzw. Eisen. Insbesondere wenn dann die Einzelteile durch Gehäuseschrauben miteinander verspannt werden, müssen entsprechend große Spalte eine Verformung zulassen. Die Gehäuseschrauben stellen einen erhöhten Bauaufwand dar, verursachen demnach höhere Kosten und haben zudem einen nicht optimalen Kraftfluß für die Vorrichtung zur Folge.

### Aufgabe der Erfindung

Der Erfindung liegt deshalb die Aufgabe zugrunde, eine Vorrichtung zur Drehwinkelverstellung einer Nockenwelle gegenüber einer Kurbelwelle für eine Brennkraftmaschine derart zu konzipieren, dass einerseits eine Massereduzierung der Vorrichtung erfolgt bei andererseits gleichzeitiger Minimierung der Leckage.

### Beschreibung der Erfindung

Erfindungsgemäß wird die Aufgabe bei einer Vorrichtung für eine Brennkraftmaschine mit den Merkmalen des Oberbegriffs von Anspruch 1 dadurch gelöst, dass der Stator einteilig mit der Stirnwand als Topf ausgebildet ist, wobei der Stator einschließlich einer eventuell darin angeordneten Dichtscheibe als spanloses Blechteil hergestellt ist. Die massiven Sinterbauteile als Druckkammer bildende Einheiten der Antriebsseite werden somit durch dünnwandige Blechund Blechumformteile ersetzt. Selbstverständlich kann statt Blech auch Band verwendet werden, wobei im folgenden Blech als Oberbegriff für Blech oder Band verwendet wird. Weil somit weniger Sinterbauteile gefertigt werden müssen, ergibt sich eine Verringerung des Zerspanungsaufwands und eine Verringerung der externen Ölleckage durch den Wegfall der porösen Sinterteile. Die spanlose Herstellung des Stators und des Gehäuses bedeutet selbstverständlich nicht, dass diese Teile nicht spanend nachbearbeitet werden, sofern es sich als erforderlich erweisen sollte.

Eine weitere Verminderung der Ölleckage folgt direkt aus der erfindungsgemäßen Einteiligkeit des Stators und der Stirnwand: Es ist zwischen diesen Teilen eine Fügestelle weniger als bei den bekannten Vorrichtungen vorhanden, welche demzufolge auch nicht abgedichtet werden muss. Durch die Einteiligkeit vermindert sich auch der Bauteile- bzw. Fertigungsaufwand, da die Stirnwand nicht extra mit dem Stator verbunden werden muss. Schließlich werden gegenüber einer axialen, kraftschlüssigen Schraubverbindung Druckspannungsverformungen reduziert.

Damit die Vorrichtung trotz ihrer geringeren Masse eine hohe Steifigkeit und Belastbarkeit aufweist, können die dünnwandigen Blech- und Blechumformteile lokal, entlang den Belastungsrichtungen durch Ausformungen oder entsprechende Profilierungen ideal der Belastung angepasst werden, ohne dass global größere Wandstärken erforderlich sind und damit eine hohe Masse in Kauf genommen werden muss. Gegenüber einer Massereduktion durch Verwendung von Leichtmetall, wie beispielsweise in DE 101 34 320 A1 vorgeschlagen, hat dies zum Vorteil, dass der Wärmeausdehnungskoeffizient aller Bauteile gleich bleibt und somit keine Undichtigkeiten aufgrund thermischer Effekte entstehen können.

Der Stator besteht aus einem Boden, der durch die Stirnwand gebildet wird, aus inneren und äußeren in Umfangsrichtung verlaufenden Wänden und aus Stegwänden, welche jeweils zwei Enden von benachbarten inneren und äußeren in Umfangsrichtung verlaufenden Wänden verbinden, im wesentlichen radial verlaufen und gegenüber einer gedachten, äußeren Wand Einschnitte begrenzen. Gegenüber einem Stator, der aus dünnwandigem Blech hergestellt ist und der nicht einteilig mit einer Stirnwand ausgebildet ist, wird die Stabilität wesentlich erhöht, weil die Stirnwand des Topfs die von Radialkräften eingebrachten Schwingungen wesentlich dämpft bzw. im voraus das Entstehen verhindert. Dadurch kann auf ein den Topf umgebendes Gehäuse verzichtet werden und somit die Masse der Vorrichtung noch einmal reduziert werden.

Die Anbindung des Topfs ohne ein ihn umgebendes Gehäuse an das Antriebsrad kann dadurch realisiert sein, dass die Einschnitte auf der der Stirnwand abgewandten Seite durch Flansche begrenzt sind. Diese Flansche werden mit dem Antriebsrad verbunden. Beispielsweise sind Durchgangsausnehmungen in den Flanschen ausgebildet, durch welche der Topf mit dem Antriebsrad verschraubt werden kann. Der Vorteil dieser Art der Ausbildung der Flansche ist, dass der Topf sehr kompakt baut und der Topf durch die Flächen der Flansche zusätzlich Stabilität verliehen bekommt, weil sie die einzelnen Druckkammern gegeneinander abstützen können. Allgemein aber wird der Zusammenhalt der Teile Stator und Antriebsrad durch Verbindungstechnologien der Umformtechnik bzw. durch allgemein kraft-, form-, reibstoffschlüssige Technologien wie beispielsweise Rändeln, Bördeln, Schweißen, Verstemmen, Vernieten, Kleben oder umgebogene Haltenasen gewährleistet.

Der Topf wird in einem Tiefziehverfahren aus einer Blechronde gefertigt. Die inneren und äußeren in Umfangsrichtung verlaufenden Wände und die Stegwände können durch radiales Tiefziehen geformt werden. In diesem Fall werden im allgemeinen die Statorwände des Topfs keinen exakt rechten Winkel zur Stirnwand des Topfs bilden. Dieser ist aber erforderlich, um die Druckkammern vollständig abzudichten. Um Leckageverluste zu vermeiden, ist es daher vorteilhaft, eine Dichtscheibe unmittelbar vor der Stirnwand anzuordnen, so dass nach Einsetzen des Rotors mit Flügeln rechtwinklige Druckkammern entstehen.

Die Dichtscheibe ist vorzugsweise aus dünnwandigem Stahl profiliert und an Größe und Form dem Topf derart angepasst, dass sie die Druckkammern druckmitteldicht vor der Stirnwand verschließt. Sie erfüllt den weiteren Zweck, die Stabilität des Topfs zusätzlich zu erhöhen, wenn man sie fest mit der Stirnwand verbindet. Anstatt eine Dichtscheibe mit der Stirnwand zu verbinden, ist es ebenso möglich, den nockenwellenseitig gelegenen Raum vor der Stirnwand auszuspritzen, um eine möglichst ebene und gegenüber den Stegwänden und äußeren in Umfangsrichtung verlaufenden Wänden rechwinklige Abdichtung der Druckkammern zu erzielen. Als Spritzmaterial kann beispielsweise Kunststoff verwendet werden oder ein anderes flüssig verarbeitbares Material, das im Betriebszustand fest ist

Die sich zwischen den Stegwänden befindenden Einschnitte können durch Kunststoff- oder Metalleinsätze gefüllt werden, welche den Topf zusätzlich verstärken und versteifen.

Die Wandstärke der Stegwände des Stators kann weiter reduziert werden, wenn verhindert wird, dass die Flügel des Rotors in ihren jeweiligen Endpositionen an die Stegwände des Stators anschlagen und Druck auf diese ausüben. Dazu ist eine Verstellwinkelbegrenzung notwendig. Diese kann beispielsweise über ein mit dem Rotor in Verbindung stehendes Element zur Verstellwinkelbegrenzung, das in eine korrespondierende Kulisse eingreift, realisiert werden.

Die erfindungsgemäß ausgebildete Vorrichtung ist also gegenüber einer Vorrichtung des Standes der Technik leichter, benötigt weniger Zerspanungsaufwand und reduziert damit die Fertigungskosten, benötigt weniger Einzelteile und verringert dadurch die Monagekosten und kann auch auf eine Kunstharzimprägnierung oder Wasserdampfbehandlung des zur Abdichtung des nun nicht mehr benötigten Sinterwerkstoffs verzichten. Sie reduziert die Anzahl der Fügestellen, damit die Anzahl der benötigten Dichtungen und minimiert damit die Leckageverluste.

### Kurze Beschreibung der Zeichnungen

Die Erfindung wird nachfolgend anhand von Ausführungsbeispielen näher erläutert und in den dazu gehörigen Zeichnungen schematisch dargestellt.

Es zeigen:
- Figur 1: einen Längsschnitt einer Vorrichtung zur Drehwinkelverstellung, wobei ein Stator einteilig mit einer Stirnwand ausgebildet ist;
- Figur 2: die Kombination zweier Querschnitte der Vorrichtung aus Figur 1
- Figur 3: einen Längsschnitt einer zweiten Vorrichtung
- Figur 4: eine perspektivische Ansicht auf eine dritte Vorrichtung

### Ausführliche Beschreibung der Zeichnungen

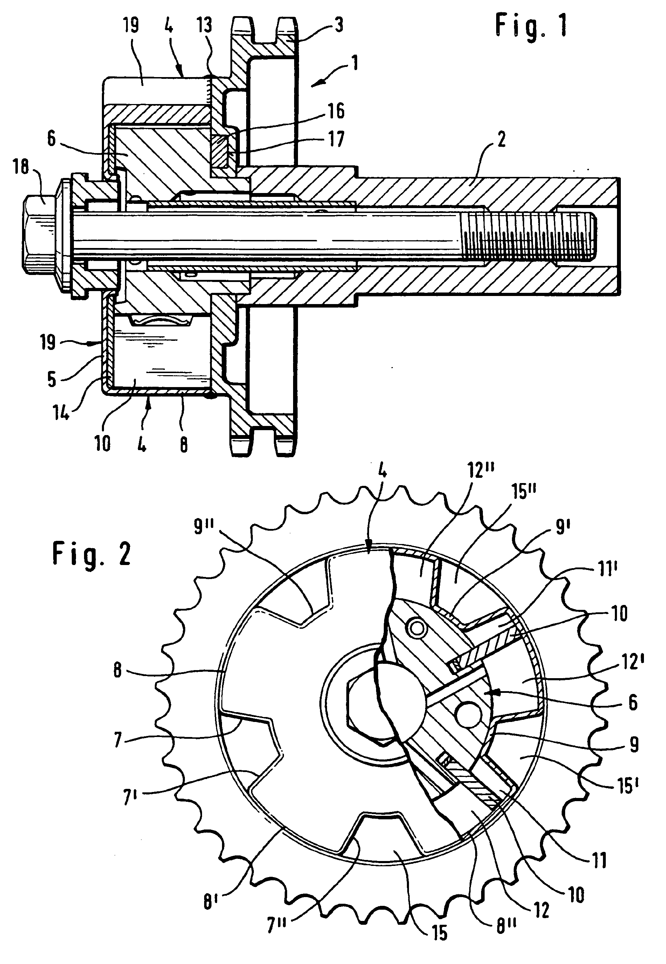

Aus Figur 1 gehen die wesentlichen Teile einer hydraulischen Vorrichtung 1 zur Drehwinkelverstellung einer Nockenwelle 2 gegenüber einer nicht dargestellten Kurbelwelle hervor, die als hydraulischer Stellantrieb zur Variierung der Öffnungs- und Schließzeiten von Gaswechselventilen einer Brennkraftmaschine ausgebildet ist. Diese Vorrichtung 1 wird durch ein Antriebsrad 3, das beispielsweise durch eine nicht näher dargestellte Kette mit der Kurbelwelle verbunden ist, angetrieben. Die Vorrichtung 1 besteht im wesentlichen aus einem fest mit dem Antriebsrad 3 verbundenen Stator 4, der einteilig mit einer Stirnwand 5 als Topf 19 ausgebildet ist und durch diese sowie das Antriebsrad 3 druckmitteldicht verschlossen ist, und einem durch eine axiale Zentralschraube 18 drehfest mit der Nockenwelle 2 verbundenen Rotor 6, wobei der Rotor 6 als Flügelrad ausgebildet ist. Durch die Einteiligkeit von Stator 4 und Stirnwand 5 als Topf ist insbesondere keine Fügestelle zwischen Stator 4 und Stirnwand 5 vorhanden. In Figur 1 ist der Stator 4 mit dem Antriebsrad 3 durch eine Schweißnaht 13 verbunden.

Figur 2 zeigt den Stator 4 der Vorrichtung 1, der durch Stegwände 7, 7', 7" und durch äußere 8, 8', 8" und innere 9, 9', 9" in Umfangsrichtung verlaufende Wände mit dem Rotor 6 und dessen Flügeln 10 erste Druckkammern 11, 11', 11" und zweite Druckkammern 12, 12', 12" bildet, die, mit Hydraultkflüssigkeit befüllt, eine Winkelverstellung zwischen Rotor 6 und Stator 4 herstellen. Die Druckkammern 11, 11', 11",12, 12', 12" werden nockenwellenseitig durch das Antriebsrad 3 verschlossen und auf der der Nockenwelle abgewandten Seite durch die Stirnwand 5 des Topfs 19. Die ersten 11, 11', 11" und zweiten 12,12',12" Druckkammern bewirken bei wahlweiser oder gleichzeitiger Druckbeaufschlagung mit Hydraulikflüssigkeit innerhalb eines maximalen Verschwenkwinkels eine Schwenkbewegung oder Fixierung des Rotors 6 gegenüber dem Antriebsrad 3 und damit eine Relativverdrehung der Nockenwelle gegenüber der Kurbelwelle der Brennkraftmaschine.

Aus der Figur 1 ist des Weiteren ein mit dem Rotor 6 in Verbindung stehendes Element 16 (Figur 1) zur Verstellwinkelbegrenzung, das in eine korrespondierende Kulisse 17 (Figur 1) eingreift zu ersehen. Mit diesem erfolgt ein Begrenzen des Verstellbereichs des Rotors 6, was die Belastungen des Stators 4 bzw. des Topfs 19 herabsetzt. Die Kulisse 17 ist dabei als kreisringförmige Begrenzungsnut ausgebildet.

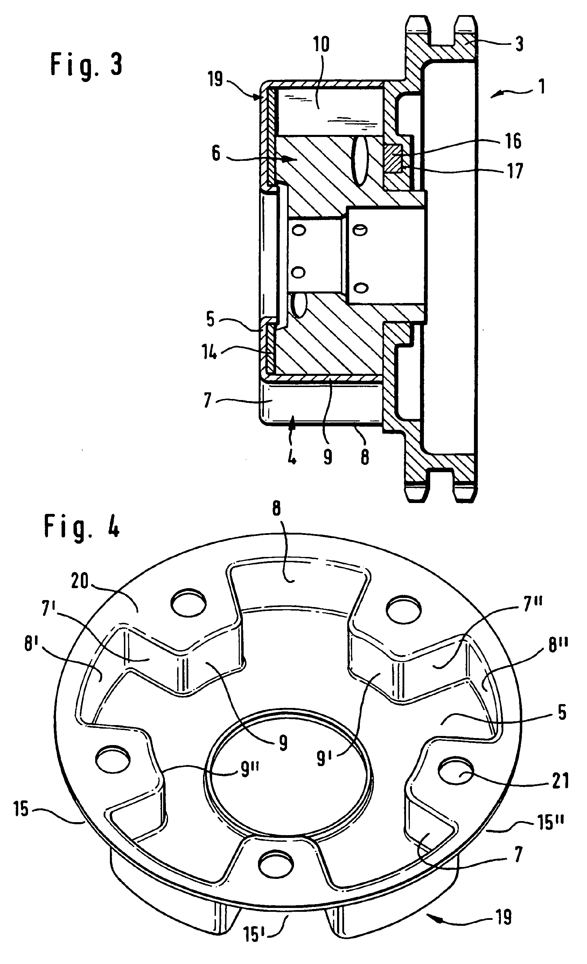

Figur 3 zeigt einen Längsschnitt einer zweiten Version eines als Topf 19 ausgebildeten Stators 4. Zwecks Abdichtung der Druckkammern 11, 11', 11 ", 12, 12', 12" ist nockenwellenseitig auf der Stirnwand 5 in den Topf 19 eine Dichtscheibe 14 angeordnet, welche der inneren Form des Topfs 19 angepasst ist. Sie reduziert die Leckageverluste, sofern der Übergang vom Stator 4 zur Stirnwand 5 des Topfs 19 keinen exakten rechten Winkel bilden.

Aus Figur 4 ist schließlich ersichtlich, dass der Topf 19 nockenwellenseitig Flansche 20 aufweist, welche ihrerseits Öffnungen 21 zur Aufnahme von Befestigungsmitteln (nicht dargestellt) aufweisen. Die Flansche 20 stützen die Druckkammern gegeneinander ab und versteifen den Topf 19. Die Befestigungsmittel verbinden den Topf kraftschlüssig mit dem Antriebsrad 3.

Zusammenfassend ergibt sich durch die Einteiligkeit vom spanlos hergestellten Stator 4 und Stirnwand 5 als ein Topf 19 eine Reduzierung der Anzahl der verwendeten Bauteile und damit des Montageaufwands. Gleichzeitig werden die Leckageverluste gemindert, weil eine Fügestelle weniger vorhanden ist und gegenüber einer gesinterten Vorrichtung kann durch Verzicht auf poröse Sinterbauteile auf eine aufwändige Wasserdampfbehandlung oder Kunstharzimprägnierung verzichtet werden.

### Bezugszahlenliste

- 1: hydraulische Vorrichtung zur Drehwinkelverstellung
- 2: Nockenwelle
- 3: Antriebsrad
- 4: Stator
- 5: Stirnwand
- 6: Rotor
- 7, 7', 7": Stegwände
- 8, 8', 8": äußere, in Umfangsrichtung verlaufende Wände
- 9,9',9": innere, in Umfangsrichtung verlaufende Wände
- 10: Flügel
- 11, 11', 11": erste Druckkammern
- 12, 12', 12": zweite Druckkammern
- 13: Schweißnaht
- 14: Dichtscheibe
- 15, 15', 15": Einschnitte
- 16: Element zur Verstellwinkelbegrenzung
- 17: Kulisse
- 18: axiale Zentralschraube
- 19: Topf
- 20: Flansch
- 21: Öffnungen

## Patentansprüche

1. Brennkraftmaschine mit einer hydraulischen Vorrichtung (1) zur Drehwinkelverstellung einer Nockenwelle (2) gegenüber einer Kurbelwelle, umfassend: Einen Rotor (6) mit daran angeordneten Flügeln (10), der drehfest mit der Nockenwelle (2) verbunden ist, einen an zumindest einer Stirnseite mit einer Stirnwand (5) versehenen Stator (4), der drehfest mit einem von der Kurbelwelle angetriebenen Antriebsrad (3) verbunden ist, wobei beiderseits der Flügel (10) Druckkammern (11, 11', 11", 12, 12', 12") vorgesehen sind, die jeweils durch Stegwände (7, 7', 7") und innere (9, 9', 9") sowie äußere (8, 8', 8"), in Umfangsrichtung, konzentrisch zueinander verlaufende Wände des Stators (4) begrenzt sind und über ein Hydrauliksystem mit Hydraulikflüssigkeit druckbeaufschlagbar oder entleerbar sind, **dadurch gekennzeichnet, dass** der Stator (4) und die Stirnwand (5) einteilig als ein Topf (19) ausgebildet sind und der Topf (19) als spanlos hergestelltes Blechteil ausgebildet ist.

2. Brennkraftmaschine nach Anspruch 1, **dadurch gekennzeichnet, dass**, ausgehend von der Stirnwand (5), jeweils ein Segment des Stators (4) durch einen spanlosen Formgebungsprozess in axialer Richtung derart versetzt ist, dass auf der einen Seite der gemeinsam mit der äußeren (8, 8', 8") in Umfangsrichtung verlaufenden Wand von einem segmentartigen Abschnitt der Stirnwand (5) sowie von gemeinsam mit diesen ausgebildeten Stegwänden (7, 7', 7") Druckkammern (11, 11', 11", 12, 12', 12") ausgebildet sind und dass auf der anderen Seite der inneren (9, 9', 9") in Umfangsrichtung verlaufenden Wand, der Stegwände (7, 7', 7") und des axial versetzten Segments der Stirnwand (5) segmentartige Einschnitte (15, 15', 15") ausgebildet sind.

3. Brennkraftmaschine nach Anspruch 2, **dadurch gekennzeichnet, dass** die Einschnitte (15, 15', 15") verstärkt oder abgestützt sind.

4. Brennkraftmaschine nach Anspruch 1, **dadurch gekennzeichnet, dass** die Druckkammern (11, 11', 11", 12, 12', 12") stirnseitig durch ein auf die Stirnwand (5) aufgebrachtes Material rechtwinklig verschlossen sind.

5. Brennkraftmaschine nach Anspruch 4, **dadurch gekennzeichnet, dass** das Material als eine der Statorform angepasste Dichtscheibe (14) ausgebildet ist.

6. Brennkraftmaschine nach Anspruch 5, **dadurch gekennzeichnet, dass** die Dichtscheibe (14) mit dem Topf (19) fest verbunden ist.

7. Brennkraftmaschine nach Anspruch 4, **dadurch gekennzeichnet, dass** die Druckkammern (11, 11', 11", 12, 12', 12") stirnseitig durch auf die Stirnwand (5) aufgespritzten Kunststoff verschlossen sind.

8. Brennkraftmaschine nach Anspruch 1, **dadurch gekennzeichnet, dass** im Rotor (6) ein Element (16) zur Verstellwinkelbegrenzung angeordnet ist, welches in eine korrespondierende Kulisse (17) eingreift.

9. Brennkraftmaschine nach Anspruch 1, **dadurch gekennzeichnet, dass** der Topf (19) aus einem Blechrohling durch Tiefziehen hergestellt ist.

10. Brennkraftmaschine nach Anspruch 1, **dadurch gekennzeichnet, dass** die Einschnitte (15, 15', 15") auf der der Stirnwand (5) abgewandten Seite durch Flansche (20) abgeschlossen sind, wobei die Flansche (20) Teil des Stators (4) sind.

11. Brennkraftmaschine nach Anspruch 10, **dadurch gekennzeichnet, dass** die Flansche (20) Öffnungen (21) zur Aufnahme von Befestigungsmitteln aufweisen.

12. Brennkraftmaschine nach Anspruch 1, **dadurch gekennzeichnet, dass** die Teile Topf (19) und Antriebsrad (3) durch Verbindungstechnologien der Umformtechnik, beispielsweise Rändeln, Bördeln, Schweißen, Verstemmen, Vernieten, Kleben oder umgebogene Haltenasen aneinander befestigt sind.

## Claims

1. Internal combustion engine having a hydraulic apparatus (1) for adjusting the rotational angle of a camshaft (2) with respect to a crankshaft, comprising: a rotor (6) having vanes (10) arranged on it, which rotor (6) is connected fixedly in terms of rotation to the camshaft (2), a stator (4) which is provided with an end wall (5) on at least one end side and is connected fixedly in terms of rotation to a drive wheel (3) which is driven by the crankshaft, pressure chambers (11, 11' , 11" , 12, 12', 12") being provided on both sides of the vanes (10), which pressure chambers (11, 11', 11'', 12, 12', 12'') are delimited in each case by web walls (7, 7', 7") and inner (9, 9', 9") and outer (8, 8', 8") walls of the stator (4) which run concentrically with respect to one another in the circumferential direction, and which pressure chambers (11, 11', 11", 12, 12', 12") can be loaded in a pressurized manner with hydraulic fluid or emptied via a hydraulic system, **characterized in that** the stator (4) and the end wall (5) are configured in one piece as a pot (19), and the pot (19) is configured as a sheet-metal part which is manufactured without cutting.

2. Internal combustion engine according to Claim 1, **characterized in that**, starting from the end wall (5), in each case one segment of the stator (4) is offset in the axial direction by a chipless forming process in such a way that pressure chambers (11, 11', 11" , 12, 12', 12") are formed on one side of the outer wall (8, 8', 8") which runs in the circumferential direction by a segment-like section of the end wall (5) and by web walls (7, 7', 7") which are formed jointly therewith, and that segment-like indents (15, 15', 15") are formed on the other side of the inner wall (9, 9', 9") which runs in the circumferential direction, the web walls (7, 7', 7") and the axially offset segment of the end wall (5).

3. Internal combustion engine according to Claim 2, **characterized in that** the indents (15, 15', 15") are reinforced or supported.

4. Internal combustion engine according to Claim 1, **characterized in that** the pressure chambers (11, 11', 11" , 12, 12', 12") are closed at the end at right angles by a material which is applied to the end wall (5).

5. Internal combustion engine according to Claim 4, **characterized in that** the material is configured as a sealing washer (14) which is adapted to the stator shape.

6. Internal combustion engine according to Claim 5, **characterized in that** the sealing washer (14) is connected fixedly to the pot (19).

7. Internal combustion engine according to Claim 4, **characterized in that** the pressure chambers (11, 11', 11" , 12, 12', 12") are closed at the end by plastic which is injection-moulded onto the end wall (5).

8. Internal combustion engine according to Claim 1, **characterized in that** an element (16) for limiting the adjustment angle is arranged in the rotor (6), which element (16) engages into a corresponding slotted guide (17).

9. Internal combustion engine according to Claim 1, **characterized in that** the pot (19) is manufactured from a sheet-metal blank by deep drawing.

10. Internal combustion engine according to Claim 1, **characterized in that** the indents (15, 15', 15") are closed off by flanges (20) on the side which faces away from the end wall (5), the flanges being part of the stator (4).

11. Internal combustion engine according to Claim 10, **characterized in that** the flanges (20) have openings (21) for accommodating fastening means.

12. Internal combustion engine according to Claim 1, **characterized in that** the parts pot (19) and drive wheel (3) are fastened to one another by joining techniques of forming technology, for example knurling, beading, welding, caulking, riveting, adhesive bonding or bent-over holding lugs.

## Revendications

1. Moteur à combustion interne comprenant un dispositif hydraulique (1) pour le décalage de l'angle de rotation d'un arbre à cames (2) par rapport à un vilebrequin, comprenant : un rotor (6) avec des pales (10) montées dessus, lequel est connecté de manière solidaire en rotation à l'arbre à cames (2), un stator (4) pourvu au moins sur un côté frontal d'une paroi frontale (5), lequel est connecté de manière solidaire en rotation à une roue d'entraînement (3) entraînée par le vilebrequin, des chambres de pression (11, 11', 11", 12, 12', 12") étant prévues de part et d'autre des pales (10), lesquelles sont limitées à chaque fois par des parois saillantes (7, 7', 7") ainsi que par des parois du stator (4) intérieures (9, 9', 9") et extérieures (8, 8', 8"), dans la direction périphérique, s'étendant concentriquement les unes par rapport aux autres et peuvent être sollicitées en pression par le biais d'un système hydraulique avec du liquide hydraulique ou être vidées, **caractérisé en ce que** le stator (4) et la paroi frontale (5) sont réalisés d'une seule pièce sous forme de pot (19) et le pot (19) est réalisé sous forme de pièce en tôle fabriquée sans enlèvement de copeaux.

2. Moteur à combustion interne selon la revendication 1, **caractérisé en ce que**, partant de la paroi frontale (5), un segment du stator (4) est à chaque fois décalé dans la direction axiale par un processus de façonnage sans enlèvement de copeaux de telle sorte que d'un côté de la paroi extérieure (8, 8', 8") s'étendant dans la direction périphérique, des chambres de pression (11, 11', 11", 12, 12', 12") soient réalisées par une portion de type segment de la paroi frontale (5) ainsi que par des parois saillantes (7; 7', 7") réalisées conjointement avec celles-ci, et que de l'autre côté de la paroi intérieure (9, 9', 9") s'étendant dans la direction périphérique, des parois saillantes (7, 7', 7") et du segment décalé axialement de la paroi frontale (5), soient réalisées des entailles de type segment (15, 15', 15") .

3. Moteur à combustion interne selon la revendication 2, **caractérisé en ce que** les entailles (15, 15', 15") sont renforcées ou supportées.

4. Moteur à combustion interne selon la revendication 1, **caractérisé en ce que** les chambres de pression (11, 11', 11", 12, 12', 12") sont fermées à angle droit du côté frontal par un matériau appliqué sur la paroi frontale (5).

5. Moteur à combustion interne selon la revendication 4, **caractérisé en ce que** le matériau est réalisé sous forme de disque d'étanchéité (14) adapté à la forme du stator.

6. Moteur à combustion interne selon la revendication 5, **caractérisé en ce que** le disque d'étanchéité (14) est connecté fixement au pot (19).

7. Moteur à combustion interne selon la revendication 4, **caractérisé en ce que** les chambres de pression (11, 11', 11", 12, 12', 12") sont fermées du côté frontal par un plastique injecté sur la paroi frontale (5).

8. Moteur à combustion interne selon la revendication 1, **caractérisé en ce que** l'on dispose dans le rotor (6) un élément (16) pour limiter l'angle de décalage, lequel vient en prise dans une coulisse correspondante (17).

9. Moteur à combustion interne selon la revendication 1, **caractérisé en ce que** le pot (19) est fabriqué à partir d'une pièce brute en tôle par emboutissage profond.

10. Moteur à combustion interne selon la revendication 1, **caractérisé en ce que** les entailles (15, 15', 15") sont fermées du côté opposé à la paroi frontale (5) par des brides (20), les brides (20) faisant partie du stator (4).

11. Moteur à combustion interne selon la revendication 10, **caractérisé en ce que** les brides (20) présentent des ouvertures (21) pour recevoir des moyens de fixation.

12. Moteur à combustion interne selon la revendication 1, **caractérisé en ce que** le pot (19) et la roue d'entraînement (3) sont fixés l'un à l'autre par des technologies de connexion de la technique de façonnage, par exemple par moletage, rabattage, soudage, matage, rivetage, collage ou par des ergots de fixation recourbés.
